# EUROPÄISCHE PATENTSCHRIFT

(11) **EP 0 839 101 B1**
(45) Veröffentlichungstag und Bekanntmachung des Hinweises auf die Patenterteilung: **23.01.2002**
(21) Anmeldenummer: 96924745.1
(22) Anmeldetag: 12.07.1996
(51) Int. Cl.: B61D 17/18, B60R 13/08

(54) **SCHALL- UND WÄRMEDÄMMENDER FUSSBODEN FÜR FAHRZEUGE, INSBESONDERE SCHIENENFAHRZEUGE**
ACOUSTICALLY AND THERMALLY INSULATING FLOORING FOR VEHICLES, ESPECIALLY RAIL VEHICLES
SOL ACOUSTIQUEMENT ET THERMIQUEMENT ISOLANT POUR VEHICULES, SPECIALEMENT POUR VEHICULES SUR RAIL

(30) Priorität: 19.07.1995 DE 19526256
(43) Veröffentlichungstag der Anmeldung: 06.05.1998
(73) Patentinhaber: Siemens Duewag Schienenfahrzeuge GmbH, 47829 Krefeld (DE)
(72) Erfinder: BROSCHART, Thomas, D-47495 Rheinberg (DE)
(86) Internationale Anmeldenummer: DE9601305
(87) Internationale Veröffentlichungsnummer: WO9703874

(56) Entgegenhaltungen:
- EP-A- 0 063 214
- EP-A- 0 384 420
- DE-A- 2 006 741

## Beschreibung

Die Erfindung betrifft einen schall- und wärmedämmenden Fußboden eines Schienenfahrzeuges, im wesentlichen bestehend aus einem fahrzeugseitigen Fußbodenträger und mit einem Gehbelag versehenen Fußbodenplatten, wobei zwischen dem Fußbodenträger und den Fußbodenplatten schalldämmende Distanzelemente angeordnet sind.

Ein Fahrzeugfußboden mit den zuvor genannten Merkmalen ist durch die DE 29 10 755 C2 bekannt. Bei diesem Fußboden ist auf die Oberseite eines wellblechförmigen Fußbodenträgers ein Mittel zur Körperschalldämmung aufgespritzt. An der Unterseite der mit einem Gehbelag abgedeckten Fußbodenplatte ist ein Mittel zur Luftschalldämmung befestigt. Des weiteren sind gitterartig ausgeführte, schalldämmende Distanzelemente aus Hartschaum vorgesehen, die jeweils durch Kleben einerseits mit dem Mittel zur Körperschalldämmung am Fußbodenträger und andererseits mit dem Mittel zur Luftschalldämmung an der Fußbodenplatte verbunden sind. In den Freiräumen innerhalb der vorgeschriebenen Fußbodenausbildung ist zur Luftschallschluckung noch Glaswolle eingelegt. Ein Nachteil des Fahrzeugfußbodens nach DE 29 10 755 C2 liegt in den relativ aufwendigen Beschichtungen des Fußbodenträgers und der Fußbodenplatten.

Aufgrund der EP 0 576 394 A1 gehört ferner ein Fahrzeugfußboden zum Stand der Technik, bei dem die begehbare Fußbodenplatte mittels örtlich angeordneter Distanzelemente auf einem Fußbodenträger abgestützt ist, der aus stranggepreßten Aluminiumprofilen besteht. Die Distanzelemente sind jeweils aus einem an C-Schienen des Fußbodenträgers angeschlossenen Grundprofil und einem gegenüber dem Grundprofil höhenversetzten Deckprofil gebildet, mit dem die Fußbodenplatte durch Schrauben verbunden ist. Zwischen dem Grundprofil und dem Deckprofil sind Profilleisten aus elastischem Material angeordnet. Im Hinblick auf möglichst geringe Wärmeverluste und zur Verbesserung der Schalldämmung vor allem bei höheren Frequenzen können die Räume zwischen den Distanzelementen mit Isoliermaterial, z. B. mit Paketen aus Wellfolie, gefüllt sein. Bei dem Fußbodenaufbau gemäß EP-A-0 567 394 wird als nachteilig angesehen, daß örtliche Distanzelemente in erheblicher Anzahl eingesetzt werden müssen, um ein Durchbiegen der Fußbodenplatten bei deren Begehen zu begrenzen. Daraus resultieren ein beträchtlicher konstruktiver Aufwand und höhere Fertigungskosten. Die örtlichen Distanzelemente erschweren im übrigen das Verlegen des Isoliermaterials, wobei die Ausschnitte des Isoliermaterials im Bereich der zahlreichen Distanzelemente mit besonderer Sorgfalt ausgeführt werden müssen, weil sonst Wärme- und Schallbrücken entstehen.

Durch die DE-A-2 006 741 ist es bekannt, eine beispielsweise durch Tiefziehen oder Pressen geformte Schale, die aus einem Teppichbelag und einer Schwerschicht besteht, über eine Schicht aus dynamisch weichem Werkstoff (Schaumstoff) auf dem Bodenblech der Karosserie eines Personenkraftwagen schwimmend zu lagern, wobei die besagte Schicht auch andere Blechpreßteile - z. B. die Spitzwand - der Karosserie überdeckt. Diese für Personenkraftwagen bestimmte Bauweise unterscheidet sich allerdings erheblich von dem oben beschriebenen Fußbodenaufbau eines Schienenfahrzeuges, weil vor allem keine Fußbodenplatten vorgesehen sind.

Ferner ist der EP-A-0 384 420 ein schallisolierender Schichtaufbau zur Bodenverkleidung von Kraftfahrzeugen zu entnehmen. Dieser Schichtaufbau enthält eine akustisch wirksame Schicht aus mindestens einer absorbierenden Schicht aus Kunststoff und/oder einer Schicht aus einem Vlies, wobei die Schicht aus Kunststoff thermoverformbar und zu Schaum verarbeitbar ist. Bei dieser Bodenverkleidung fehlen - ebenso wie bei der Bauweise gemäß der DE-A-2 006 741 - die im Patentanspruch 1 angegebenen und für die Erfindung wesentlichen Fußbodenplatten, die im übrigen der Befestigung von Fahrgastsitzen dienen.

Die Erfindung geht daher von der Aufgabe aus, die oben genannten Nachteile zu beseitigen, insbesondere also einen Schienenfahrzeug-Fußboden zu schaffen, bei dem durch möglichst wenige, einfach und kostengünstig montierbare Bauteile aus beanspruchungsgerechtem Werkstoff eine niedrige Bauhöhe, ein geringes Gewicht, ein hohes Maß an Schalldämpfung und eine gute, von Wärmebrücken freie Wärmeisolierung erreichbar sind.

Diese Aufgabe wird erfindungsgemäß dadurch gelöst, daß die Distanzelemente durch Schaumstoffmatten gebildet sind, die den Fußbodenträger soweit wie möglich abdecken und mit den Fußbodenplatten in großflächiger Wirkverbindung stehen.

Die Schaumstoffmatten können besonders einfach und schnell auf dem Fußbodenträger verlegt werden, wenn gemäß einer Ausgestaltung der Erfindung die Schaumstoffmatten jeweils in Querrichtung des Fahrzeuges angeordnet sind und eine der Breite des Fußbodenträgers angeglichene Erstreckung aufweisen.

Um die Bauteilsteifigkeit im Hinblick auf eine gezielte Körperschallisolierung in weiten Grenzen variieren zu können, ist nach einer nächsten Ausführungsform der Erfindung vorgesehen, daß die Schaumstoffmatten an ihrer Oberseite und/oder an ihrer Unterseite durch Prägen oder Ausschürfen erzeugte Erhebungen aufweisen. Als zusätzlicher Vorteil ergibt sich eine Belüftung des Raumes zwischen dem Fußbodenträger und den Fußbodenplatten.

In weiterer Ausgestaltung der Erfindung sind die Erhebungen jeweils als Pyramidenstumpf oder als Kalotte gestaltet. Dadurch ergibt sich ein progressiver Verlauf der Steifigkeitskennlinie der jeweiligen Schaumstoffmatte, so daß eine belastungsunabhängige Tauch-Abstimmfrequenz der Fußbodenplatten zu realisieren ist.

Im Bereich von Fahrwerken oder von Unterfluraggregaten werden an die akustischen Dämmeigenschaften des Fußbodens hohe Anforderungen gestellt. Um zum einen das Maß an Schalldämmung zu erhöhen, zum anderen die stets verlangte Güte der Wärmeisolierng durch einfache Mittel noch verbessern zu können, liegt eine weitere Ausgestaltung der Erfindung darin, daß zumindest die in schalltechnisch oder thermisch kritischen Fahrzeugbereichen befindlichen Schaumstoffmatten jeweils mit wenigstens einer Schicht mit entsprechenden Materialeigenschaften, z. B. eine Schwerefolie, kombiniert sind.

Ein Verschieben und ein Abheben der Fußbodenplatten bei Extrembelastungen (Unfall) wird auf einfache Weise gemäß einer nächsten Ausführungsform der Erfindung dadurch verhindert, daß die Fußbodenplatten durch in Längs-, Querund Aufwärtsrichtung wirksame Überlastsicherungen fahrzeugseitig gehalten sind. Unter normalen Betriebsbedingungen besteht mit Ausnahme der Schaumstoffmatten kein direkter Kontakt zwischen dem Fußbodenträger und den Fußbodenplatten, so daß durch die Überlastsicherungen keine Körperschall- oder Wärmebrücken entstehen.

Gemäß ergänzenden Ausgestaltungen der Erfindung sind die Überlastsicherungen durch an der Fahrzeugseitenwand befestigte elastische Halterungen gebildet oder in Form von Seilen oder Sicherungsbolzen zwischen dem Fußbodenträger und der Fußbodenplatte angeordnet.

Die mit dem Gegenstand nach der Erfindung erzielbaren Vorteile bestehen insbesondere in folgendem: Die hinsichtlich Werkstoff und Montage kostengünstigen Schaumstoffmatten bilden eine großflächige Bettung für die Fußbodenplatten des Schienenfahrzeuges, so daß diese kaum auf Biegung beansprucht werden. Daraus resultieren im Vergleich zu herkömmlichen Fußbodengestaltungen einerseits eine höhere Belastbarkeit des Bodens, andererseits die Möglichkeiten, die Anforderungen an die Festigkeit der Fußbodenplatten zu senken oder deren Dicke zu reduzieren. Da die Schaumstoffmatten über sehr gute Wärmeisolierungseigenschaften verfügen, ergeben sich gegenüber bekannten Ausführungen ein höherer Wärmewiderstand oder aber bei gleichem Wärmewiderstand eine geringere Fußbodenhöhe. Durch die Schaumstoffmatten werden weiter vorteilhaft auf einfache und wirksame Weise Schwingungen und Körperschall des Schienenfahrzeuges gedämmt bzw. gedämpft und von den Fußbodenplatten ferngehalten. Da die Fußbodenplatten direkt auf den Schaumstoffmatten aufliegen und durch ihr Eigengewicht angepreßt werden, entsteht durch die Fugenreibung eine erhöhte Dämpfung, die das akustische Verhalten verbessert.

Ausführungsbeispiele der Erfindung sind in der Zeichnung schematisch dargestellt und werden im folgenden näher beschrieben. Es zeigen
- Fig. 1: einen erfindungsgemäßen Fußboden eines Schienenfahrzeuges im Schnitt in Fahrzeugquerrichtung,
- Fig. 2: einen Ausschnitt aus einer Schaumstoffmatte in der Draufsicht,
- Fig. 3: den Schnitt nach der Linie III - III in Fig. 2,
- Fig. 4: den Bereich Fahrzeugfußboden - Fahrzeugseitenwand im Querschnitt,
- Fig. 5: eine der Fig. 4 ähnliche Schnittdarstellung,
- Fig. 6: die Einzelheit Z aus Fig. 5,
- Fig. 7: eine Schaumstoffmatte mit zusätzlichen Schichten im Schnitt.

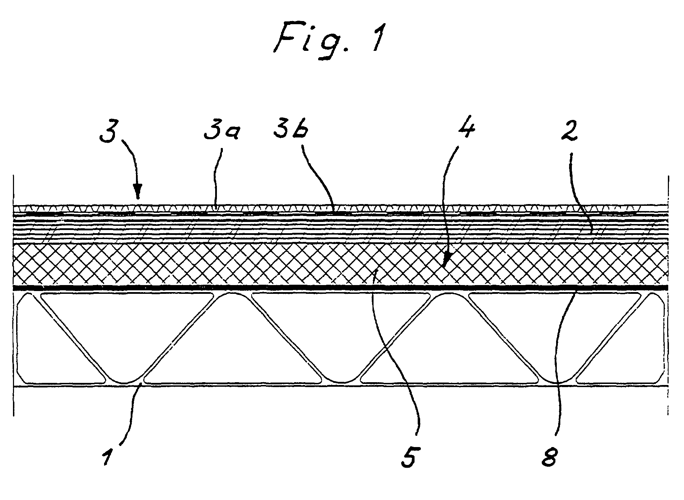

Gemäß Fig. 1 besteht der Fußboden des Schienenfahrzeuges aus einem unteren Fußbodenträger 1 und oberen Fußbodenplatten 2, die jeweils in Fahrzeugquerrichtung verlaufen und in dessen Längsrichtung nebeneinander angeordnet sind. Die Fußbodenplatten 2 haben einen Gehbelag 3, hier einen Teppichboden 3a, der mit einem vorwiegend als Feuchtigkeitsschutz dienenden Bodenbelag 3b z. B. aus PVC unterlegt ist. Zwischen dem Fußbodenträger 1 und den Fußbodenplatten 2 sind als Distanzelemente 4 schall- und wärmedämmende Schaumstoffmatten 5 angeordnet, die den Fußbodenträger 1 vollständig abdecken und die Fußbodenplatten 2 vollflächig abstützen. Die Schaumstoffmatten 5 verlaufen wie die Fußbodenplatten 2 in Querrichtung des Fahrzeuges, wobei die Erstreckung der Schaumstoffmatten 5 im Hinblick auf ein schnelles Verlegen und zum Vermeiden von Stoßstellen in Längsrichtung mit der Breite des Fußbodenträgers 1 übereinstimmt. In Fahrzeuglängsrichtung sind die Fußbodenplatten 2 und die Schaumstoffmatten 5 in ihren Abmessungen derart aufeinander abgestimmt, daß in Querrichtung keine übereinander liegenden Stoßstellen vorkommen. Für die Schaumstoffmatten 5 wird vorzugsweise ein geschlossenporiger Werkstoff gewählt mit einer Dichte von 20 bis 30 kg/m³, einer Wärmeleitzahl von 0,015 bis 0,030 W/m K und einer Tauch-Eigenfrequenz von 20 bis 40 Hz.

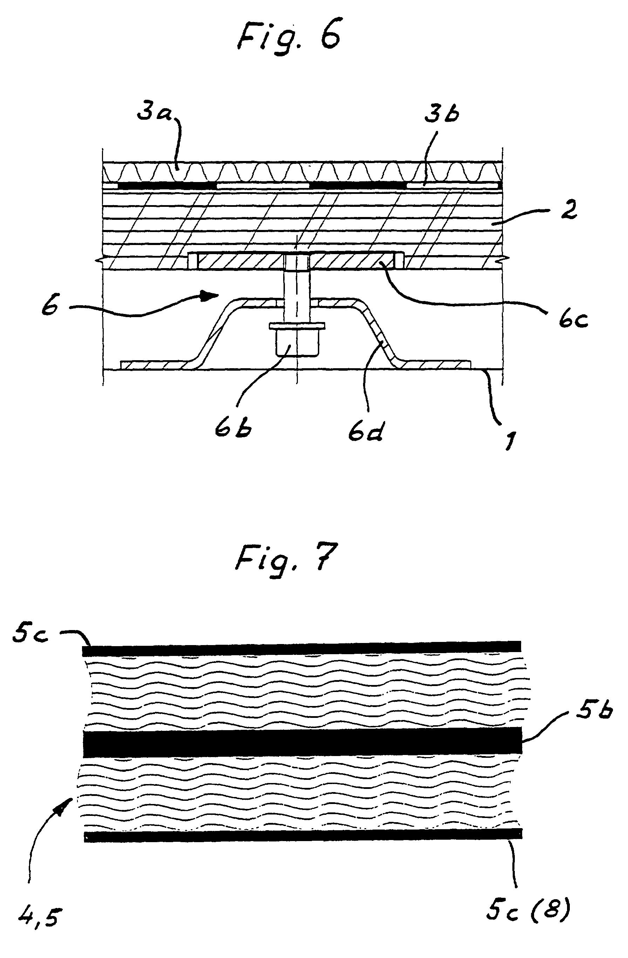

Auf der Oberseite des Fußbodenträgers 1 nach Fig. 1 befindet sich eine körperschalldämmende Isolierung 8, die z. B. aufgespritzt werden kann. Bei der in Fig. 7 gezeigten, gleichfalls als Distanzelement 4 einsetzbaren Schaumstoffmatte 5 ist diese körperschalldämmende Isolierung 8 ersetzt durch eine entsprechende Dämpfungsfolie 5c, die beidseitig klebend ausgeführt sein kann. Eine ähnliche obere Folie 5c dient der zusätzlichen Bedämpfung der Fußbodenplatten 2, wobei das Maß an Schalldämmung durch eine Schwerefolie Sb weiter erhöht wird.

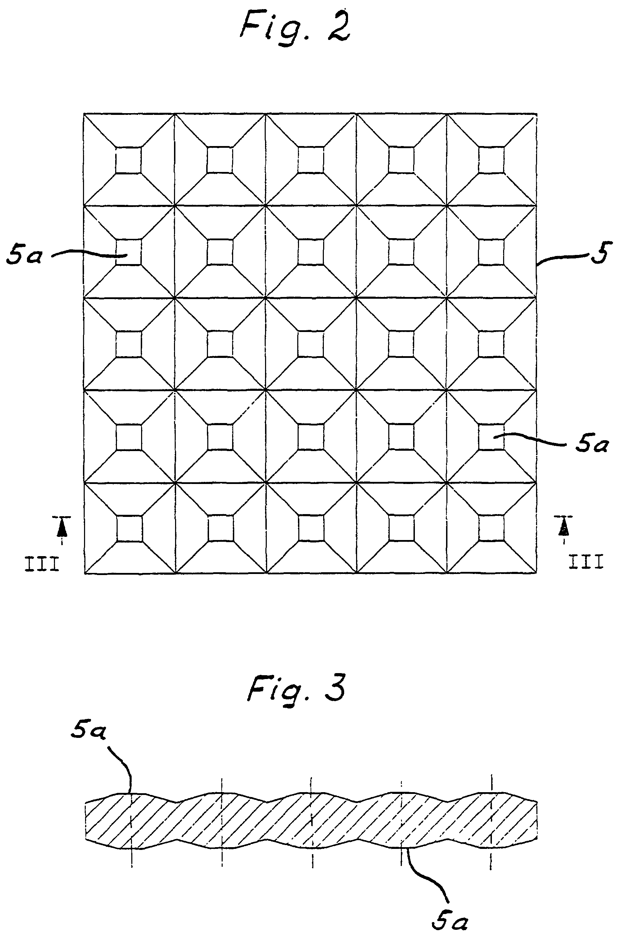

Wie aus Fig. 2 und 3 ersichtlich ist, können die Schaumstoffmatten 5 an ihrer Oberseite und an ihrer Unterseite - alternativ auch nur an einer dieser Seiten - beispielsweise als Pyramidenstumpf oder als Kalotte gestaltete Erhebungen 5a aufweisen, die durch Prägen oder Ausschürfen erzeugbar sind. Durch diese Erhebungen 5a ist es möglich, die Bauteilsteifigkeit im Hinblick auf eine gezielte Körperschallisolierung in weiten Grenzen zu variieren. Es versteht sich, daß die beiden Schaumstoffschichten der Schaumstoffmatte 5 nach Fig. 7 mit den beschriebenen Erhebungen 5a versehen sein können.

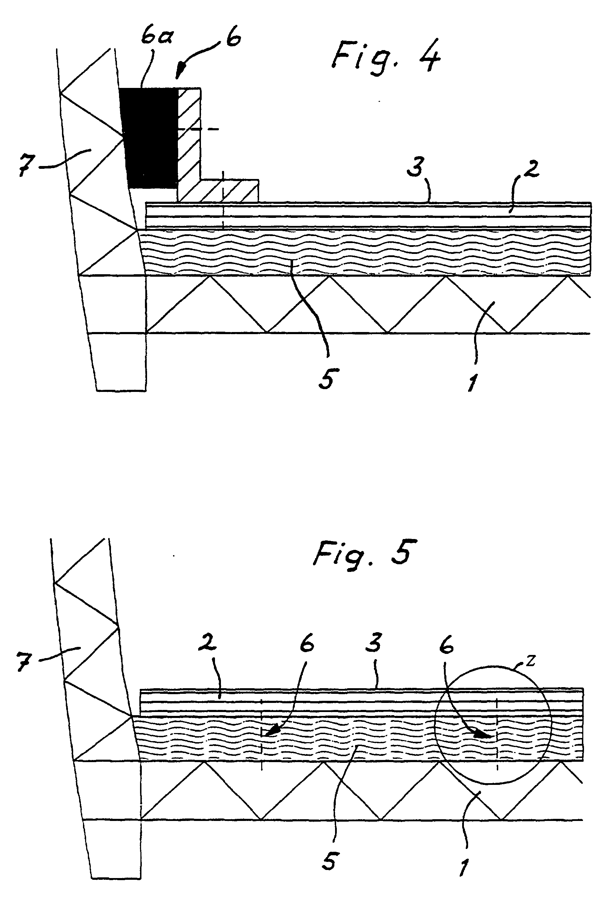

Durch Überlastsicherungen 6, die den Fig. 4 bis 6 zu entnehmen sind, wird einem Verschieben und einem Abheben der Fußbodenplatten 2 bei Extrembelastungen (Unfall) entgegengewirkt. Gemäß Fig. 4 sind die Überlastsicherungen 6 jeweils durch elastische Halterungen 6a gebildet, die einerseits an den Fußbodenplatten 2, andererseits an der Fahrzeugseitenwand 7 kraftübertragend befestigt sind. Nach Fig. 5 und 6 sind die Überlastsicherungen 6 in Form von Sicherungsbolzen 6b zwischen dem Fußbodenträger 1 und den Fußbodenplatten 2 angeordnet. Die Sicherungsbolzen 6b werden entweder direkt in die Fußbodenplatten 2 geschraubt oder - siehe Fig. 6 - in jeweils mit den Fußbodenplatten 2 verbundene Verstärkungsplatten 6c, wobei zwischen dem Schaft des Sicherungsbolzen 6b und einer Bohrung in einem trägerseitig angeschlossen Sicherungsprofil 6d ein horizontaler Freiraum und zwischen dem Kopf des Sicherungsbolzens 6b und dem Sicherungsprofil 6d ein vertikaler Freiraum vorliegt. Durch diese Freiräume, die nur bei Extrembelastungen aufgehoben werden, besteht im Normalbetrieb keine Körperschallbrücke. Für jede Fußbodenplatte 2 genügen im übrigen zwei der oben beschriebenen Überlastsicherungen 6.

### Liste der Bezugszeichen

- 1: Fußbodenträger eines Schienenfahrzeuges
- 2: Fußbodenplatte
- 3: Gehbelag
- 3a: Teppichboden
- 3b: Bodenbelag, z. B. aus PVC
- 4: Distanzelement
- 5: Schaumstoffmatte
- 5a: Erhebung (Pyramidenstumpf oder Kalotte)
- 5b: Schwerefolie
- 5c: Dämpfungsfolie
- 6: Überlastsicherung
- 6a: elastische Halterung
- 6b: Sicherungsbolzen
- 6c: Verstärkungsplatte
- 6d: Sicherungsprofil
- 7: Fahrzeugseitenwand
- 8: körperschalldämmende Isolierung

## Patentansprüche

1. Schall- und wärmedämmender Fußboden eines Schienenfahrzeuges, im wesentlichen bestehend aus einem fahrzeugseitigen Fußbodenträger (1) und mit einem Gehbelag (3) versehenen Fußbodenplatten (2), wobei zwischen dem Fußbodenträger (1) und den Fußbodenplatten (2) schalldämmende Distanzelemente (4) angeordnet sind, **dadurch gekennzeichnet, daß** die Distanzelemente (4) durch Schaumstoffmatten (5) gebildet sind, die den Fußbodenträger (1) vollständig abdecken und mit den Fußbodenplatten (2) in großflächiger Wirkverbindung stehen.

2. Fahrzeugfußboden nach Anspruch 1, **dadurch gekennzeichnet, daß** die Schaumstoffmatten (5) jeweils in Querrichtung des Fahrzeuges angeordnet sind und eine der Breite des Fußbodenträgers (1) angeglichene Erstreckung aufweisen.

3. Fahrzeugfußboden nach Anspruch 1 oder 2, **dadurch gekennzeichnet, daß** die Schaumstoffmatten (5) an ihrer Oberseite und/oder an ihrer Unterseite durch Prägen oder Ausschürfen erzeugte Erhebungen (5a) aufweisen.

4. Fahrzeugfußboden nach Anspruch 3, **dadurch gekennzeichnet, daß** die Erhebungen (5a) jeweils als Pyramidenstumpf oder als Kalotte gestaltet sind.

5. Fahrzeugfußboden nach einem der Ansprüche 1 bis 4, **dadurch gekennzeichnet, daß** zumindest die in schalltechnisch oder thermisch kritischen Fahrzeugbereichen befindlichen Schaumstoffmatten (5) jeweils mit wenigstens einer Schicht mit entsprechenden Materialeigenschaften, z. B. eine Schwerefolie (5b), kombiniert sind.

6. Fahrzeugfußboden nach einem der Ansprüche 1 bis 5, **dadurch gekennzeichnet, daß** die Fußbodenplatten (2) durch in Längs-, Quer- und Aufwärtsrichtung wirksame Überlastsicherungen (6) fahrzeugseitig gehalten sind.

7. Fahrzeugfußboden nach Anspruch 6, **dadurch gekennzeichnet, daß** die Überlastsicherungen (6) durch an der Fahrzeugseitenwand (7) befestigte elastische Halterungen (6a) gebildet sind.

8. Fahrzeugfußboden nach Anspruch 6, **dadurch gekennzeichnet, daß** die Überlastsicherungen (6) in Form von Seilen oder Sicherungsbolzen (6b) zwischen dem Fußbodenträger (1) und der Fußbodenplatte (2) angeordnet sind.

## Claims

1. An acoustically and thermally insulating floor for a rail vehicle, substantially comprising a vehicle floor support (1) and floor plates (2) provided with a covering (3), wherein acoustically insulating spacers (4) are arranged between the floor support (1) and the floor plates (2), **characterised in that** the spacers (4) are formed by foamed material mats (5) completely covering the floor support (1) and operatively connected to the floor plates (2) over a large area.

2. A vehicle floor according to claim 1, **characterised in that** the foamed material mats (5) are each arranged in the transverse direction of the vehicle and have an extent adapted to the width of the floor support (1).

3. A vehicle floor according to claim 1 or 2, **characterised in that** the foamed material mats (5) have elevations (5a) formed on their upper side and/or on their underside by stamping or hollowing out.

4. A vehicle floor according to claim 3, **characterised in that** the elevations (5a) are each formed as a truncated pyramid or a cap.

5. A vehicle floor according to any one of claims 1 to 4, **characterised in that** at least the foamed material mats (5) in acoustically or thermally critical regions of the vehicle are each combined with at least one layer having corresponding material properties, e.g. a gravity film (5b).

6. A vehicle floor according to any one of claims 1 to 5, **characterised in that** the floor plates (2) are mounted on the vehicle by overload protection means (6) acting in the longitudinal, transverse and upwards directions.

7. A vehicle floor according to claim 6, **characterised in that** the overload protection means (6) are formed by resilient mountings (6a) fixed to the side wall (7) of the vehicle.

8. A vehicle floor according to claim 6, **characterised in that** the overload protection means (6) are arranged in the form of cables or safety bolts (6b) between the floor support (1) and the floor plate (2).

## Revendications

1. Plancher acoustiquement et thermiquement isolant équipant un véhicule sur rails, comprenant pour l'essentiel un support (1) solidaire du véhicule, et des dalles (2) munies d'un revêtement de déambulation (3), des éléments d'espacement (4) acoustiquement isolants étant interposés entre le support (1) du plancher et les dalles (2) dudit plancher, **caractérisé par le fait que** les éléments d'espacement (4) sont formés par des capitons (5) en mousse qui recouvrent totalement le support (1) du plancher et sont en liaison efficace avec les dalles (2) dudit plancher, par une grande superficie.

2. Plancher de véhicule, selon la revendication 1, **caractérisé par le fait que** les capitons (5) en mousse sont respectivement disposés dans la direction transversale du véhicule, et présentent une étendue coordonnée avec la largeur du support (1) du plancher.

3. Plancher de véhicule, selon la revendication 1 ou 2, **caractérisé par le fait que** les capitons (5) en mousse comportent, à leur face supérieure et/ou à leur face inférieure, des protubérances (5a) produites par matriçage ou par enlèvement de matière.

4. Plancher de véhicule, selon la revendication 3, **caractérisé par le fait que** les protubérances (5a) revêtent, respectivement, la forme d'une pyramide tronquée ou d'une calotte.

5. Plancher de véhicule, selon l'une des revendications 1 à 4, **caractérisé par le fait qu'**au moins les capitons (5) en mousse, situés dans des régions du véhicule qui sont acoustiquement ou thermiquement critiques, sont respectivement combinés à au moins une couche douée de propriétés matérielles correspondantes, par exemple une feuille compacte (5b).

6. Plancher de véhicule, selon l'une des revendications 1 à 5, **caractérisé par le fait que** les dalles (2) dudit plancher sont retenues, côté véhicule, par des sûretés (6) prévenant une surcharge et agissant dans les directions longitudinale, transversale et ascendante.

7. Plancher de véhicule, selon la revendication 6, **caractérisé par le fait que** les sûretés (6) prévenant une surcharge sont formées par des organes élastiques de retenue (6a) fixés à la paroi latérale (7) du véhicule.

8. Plancher de véhicule, selon la revendication 6, **caractérisé par le fait que** les sûretés (6) prévenant une surcharge sont interposées, sous la forme de câbles ou de boulons de sûreté (6b), entre le support (1) du plancher et la dalle (2) dudit plancher.
